# EUROPÄISCHE PATENTSCHRIFT

(11) **EP 0 899 861 B1**
(45) Veröffentlichungstag und Bekanntmachung des Hinweises auf die Patenterteilung: **22.12.2004**
(21) Anmeldenummer: 98810629.0
(22) Anmeldetag: 06.07.1998
(51) Int. Cl.: H02M 7/48, H02H 7/125

(54) **Stromrichterschaltungsanordnung**
Power converter circuit
Circuit convertisseur de puissance

(30) Priorität: 25.08.1997 DE 19736904
(43) Veröffentlichungstag der Anmeldung: 03.03.1999
(73) Patentinhaber: ABB Schweiz AG, 5400 Baden (CH)
(72) Erfinder: Odegard, Björn, 5300 Turgi (CH); Rees, Jochen, 79761 Waldhut-Tiengen (DE)
(74) Vertreter: ABB Patent Attorneys

(56) Entgegenhaltungen:
- DE-A- 4 418 886
- DE-C- 4 441 279
- US-A- 4 831 487
- US-A- 4 884 182
- US-A- 5 310 992

## Beschreibung

### Technisches Gebiet

Die Erfindung bezieht sich auf das Gebiet der Leistungselektronik. Sie geht aus von einer Stromrichterschaltungsanordnung mit einem Gleichrichter, insbesondere in 12-Puls Topologie, und einem über einen Zwischenkreis nachgeschalteten Wechselrichter nach dem Oberbegriff des ersten Anspruchs.

### Stand der Technik

Eine gattungsgemässe Stromrichterschaltungsanordnung umfasst einen Gleichrichter, der insbesondere eine 12-Puls Topologie aufweist und einen Gleichspannungszwischenkreis speist. Der Gleichrichter umfasst einen ersten Teilgleichrichter, der an eine Sternschaltung eines Wechselspannungsnetzes angeschlossen ist, und einen zweiten Teilgleichrichter, der an eine Dreieckschaltung des Wechselspannungsnetzes angeschlossen ist. An die Teilgleichrichter kann ein Gleichspannungszwischenkreis angeschlossen sein, der z.B. einen nachgeschalteten Umrichter speist. Durch die Verwendung der 12-Puls Topologie erzielt man eine Gleichspannung, die sich durch eine äusserst niedrige Welligkeit auszeichnet. Dem Gleichspannungszwischenkreis ist ein Wechselrichter nachgeschaltet, der z.B. die Form eines Dreipunktwechselrichters aufweisen kann. Die Bauelemente dieser Schaltungsanordnung müssen im Hinblick auf verschiedene gleichrichter-, netz- oder wechselrichterseitige Ausfälle geschützt werden. Insbesondere dürfen die Zwischenkreiskondensatoren nicht überladen werden. Bei Ausfall eines Halbleiters der Gleichrichter müssen Folgeschäden auf ein Minimum beschränkt werden. Dasselbe gilt für den Ausfall eines Wechselrichterhalbleiters. Schliesslich sollten auch ungewöhnlich hohe Netzüberspannungen ohne Schaden abgefangen werden können.

### Darstellung der Erfindung

Aufgabe der Erfindung ist es, eine Stromrichterschaltungsanordnung anzugeben, die zuverlässig gegen die oben erwähnten gleichtrichter-, netz- oder wechselrichterseitige Ausfälle geschützt werden kann. Diese Aufgabe wird durch die Merkmale des unabhängigen Anspruchs gelöst.

Kern der Erfindung ist es also, dass eine Schutzschaltung zwischen den beiden Teilgleichrichtern des Gleichrichters und einem mittleren Potential des Gleichspannungszwischenkreises geschaltet ist.

Eine Ausführungsform zeichnet sich dadurch aus, dass die Schutzschaltung Spannungsbegrenzerelemente, insbesondere in der Form von Varistoren oder verwandten Elementen, aufweist. Die Spannungsbegrenzerelemente können teilweise auch ein- und ausschaltbar sein.

Weitere vorteilhafte Ausführungsformen ergeben sich aus den entsprechenden abhängigen Ansprüchen.

### Kurze Beschreibung der Zeichnungen

Nachfolgend wird die Erfindung anhand von Ausführungsbeispielen im Zusammenhang mit den Zeichnungen näher erläutert.

Es zeigen:

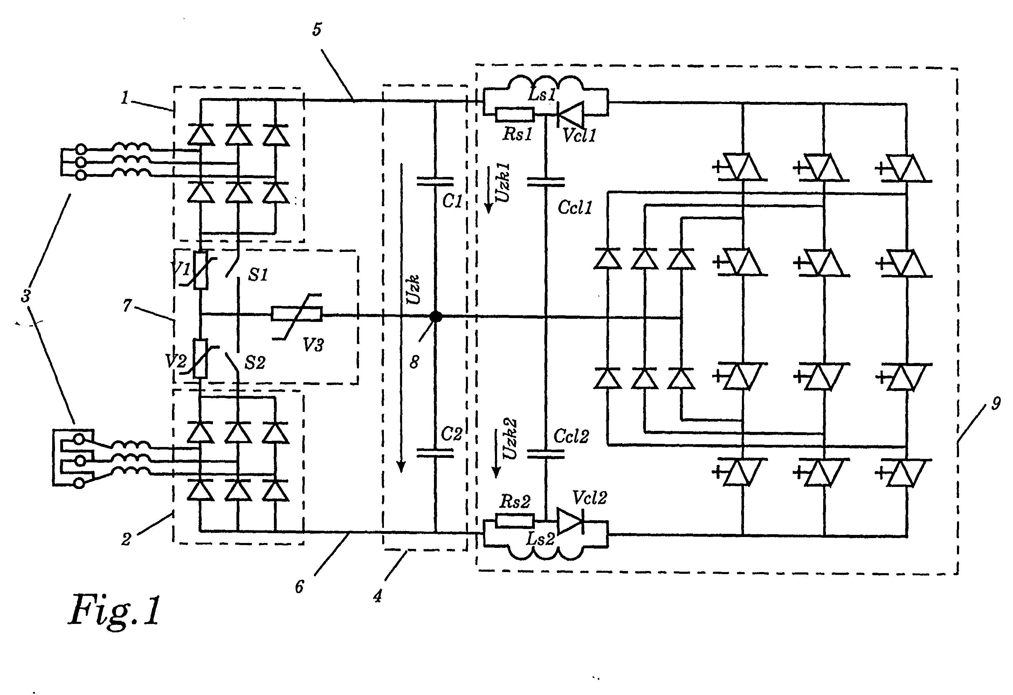

- **Fig. 1**: Ein Schaltbild der Erfindung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

Figur 1 zeigt ein Schaltbild eines Ausführungsbeispiels der Erfindung. Auf der rechten Seite der Figur ist ein Dreipunktwechselrichter 9 dargestellt, der von einem Zwölfpulsgleichrichter 1, 2 über einen Zwischenkreis 4 mit einem Plus- 5, einem Minus- 6 und einem mittleren Potentialanschluss 8 gespeist wird. Der Zwischenkreis 4 umfasst insbesondere eine Kondensatorbank C1, C2, und der Wechselrichter 9 wird durch ein Beschaltungsnetzwerk vor zu hohen Strom- und Spannungsflanken geschützt. Der Gleichrichter umfasst zwei Teilgleichrichter 1 und 2, von denen der erste mit einer Sternschaltung eines Wechselspannungsnetzes 3 und der zweite mit einer Dreieckschaltung des Wechselspannungsnetzes verbunden ist. Der Gleichrichter weist also die bekannte 12-Puls-Topologie auf. Der Wechselrichter 9 umfasst neben der Halbleiterschaltern, z.B. GTOs, ein Beschaltungsnetzwerk mit zwei Strombegrenzungsdrosseln Ls1, Ls2, zwei Widerständen Rs1, Rs2, zwei Beschaltungsdioden Vcl1, Vcl2 und zwei Beschaltungskondensatoren Ccl1, Cc12.

Nach der Erfindung ist nun eine Schutzschaltung 7 zwischen die beiden Teilgleichrichter 1 und 2 und den Mittelpotentialanschluss 8 geschaltet. Die Schutzschaltung umfasst Spannungsbegrenzerelemente V1, V2, V3, insbesondere in der Form von Varistoren. Das erste Spannungsbegrenzerelemente V1 ist einerseits mit dem ersten Teilgleichrichter 1 und einem gemeinsamen Knotenpunkt 7 verbunden. Das zweite Spannungsbegrenzerelement V2 ist einerseits mit dem zweiten Teilgleichrichter 2 und dem gemeinsamen Knotenpunkt 7 verbunden. Das dritte Spannungsbegrenzerelement V3 ist mit dem Mittelpotentialanschluss 8 und dem gemeinsamen Knotenpunkt 7 verbunden. Die ersten und zweiten Spannungsbegrenzerelemente 1 und 2 können ein- und ausschaltbar ausgebildet sein, in dem z.B. ein Schalter S1 oder S2 parallel dazu liegt.

Die Schaltung funktioniert wie folgt:
1. Aufladevorgang des Zwischenkreises:
   Die Schutzschaltung verhindert zuverlässig eine unerwünschte Überladung der Kondesatorbank C1, C2 des Gleichspannungszwischenkreises 4. Der Aufladevorgang kann wie folgt ablaufen:
   - Der Netzhauptschalter (nicht dargestellt) wird geschlossen. Die Schalter S1 und S2 bleiben offen bis die Zwischenkreisspannung Uzk stationär eingeschwungen ist. Sie ist deutlich kleiner als die Leerlaufspannung Uzk0, wenn die Spannungsbegrenzer V1 und V2 richtig ausgelegt werden.
   - Der Schalter S1 wird geschlossen. Die Zwischenkreisspannung Uzkl erhöht sich, erreicht aber nicht die Leerlaufspannung Uzk10, da der Spannungsbegrenzer V3 eine begrenzende Wirkung hat.
   - S1 wird geöffnet und S2 geschlossen. Die Zwischenkreisspannung Uzk2 erhöht sich, erreicht aber nicht die Leerlaufspannung Uzk20, da der Spannungsbegrenzer V3 eine begrenzende Wirkung hat.
   - S1 wird wieder geschlossen. Die Zwischenkreisspannung überschwingt um den Betrag der Schwellspannung nur leicht, wenn V3 entsprechend ausgelegt wird.
2. Ausfall einer Gleichrichterdiode:
   Beim Ausfall einer Gleichrichterdiode verhindert die Schutzschaltung gefährliche Folgeausfälle, indem der Begrenzer V3 den daraus folgenden Kurzschlussstrom begrenzt. Dadurch wird ein Überschreiten des Grenzlastintervalls des ausgefallenen Halbleiters verhindert. Um Folgeausfälle im benachbarten Gleichrichter zu vermeiden, müssen die Streuinduktivitäten in den Kurzschlusspfaden aufeinander abgestimmt sein. Die Schutzfunktion ist gewährleistet, ohne dass der Ausfall von der Regelung oder Steuerung erfasst wird.
3. Halbleiter-Ausfall im Wechselrichter:
   Bei einen Halbleiterausfall im Wechselrichter, der zu einem Kurzschluss einer Hälfte des Zwischenkreises 4 (z.B. C1) führen kann, verhindert die Schutzschaltung gefährliche Folgeausfälle. Dies geschieht dadurch, dass die Schalter S1 und S2 sofort nach Feststellung des Ausfalles geöffnet werden. Dies muss innerhalb von einigen Mikrosekunden nach dem Ausfallzeitpunkt erfolgen. Nach dem Entladen der betroffenen Hälfte des Zwischenkreiskondensators, z.B. C1, bietet V1 eine negative Spannung für den Stromaufbau in der Strombegrenzungsdrossel Ls1 an. Durch gezielte Auslegung von V1 kann ein Überschreiten des Grenzlastintegrals von allen an dem Kurzschluss beteiligten Halbleitern erreicht werden.
   In diesem Fall ist nun ein Kurzschluss im Wechselrichter 9 vorhanden. Das Netz 3 speist demzufolge über den Teilgleichrichter 1 einen Kurzschlussstrom in den Kurzschlusspfad bis die Netzsicherung trennt oder der Hauptschalter öffnet. Um die Anforderungen an das Energieschluckvermögen des Begrenzers V1 zu reduzieren, können die Schalter S1 und S2 wieder geschlossen werden, nachdem die Schwingungen zwischen C1 und Ls1 abgeklungen sind.
   Analoge Betrachtungen gelten selbstredend für einen Ausfall im Bereich von C2 bzw. für einen Kurzschluss der beiden Zwischenkreiskondensatoren C1 und C2. Im letztgenannten Fall treten beide Begrenzer V1 und V2 in Aktion.
4. Netzüberspannungen, die den Zwischenkreis unzulässig überladen: Bei Zwischenkreisüberspannung werden die Schalter S1 und S2 geschlossen. Dies verhindert wirksam eine gefährliche Überladung des Zwischenkreises auch bei aussergewöhnlich hohen Netzüberspannungen.

Insgesamt erreicht man mit der Erfindung einen sicheren Betrieb einer Stromrichterschaltungsanordnung. Die benötigte Schutzschaltung ist ausserdem einfach aufgebaut und ermöglicht ein Einsparen von zahlreichen sonstigen Beschaltungselemente, insbesondere des Gleichrichters.

### Bezugszeichenliste

- 1: Teilgleichrichter
- 2: Teilgleichrichter
- 3: Wechselspannungsnetz
- 4: Zwischenkreis
- 5: Plusanschluss
- 6: Minusanschluss
- 7: Schutzschaltung
- 8: Mittelpotential
- 9: Wechselrichter
- 10: gemeinsamer Knotenpunkt
- V1, V2, V3: Spannungsbegrenzerelemente
- S1, S2: Schalter
- Uzk: Zwischenkreisspannung
- Uzk1, Uzk2: Zwischenkreisteilspannungen
- C1, C2: Zwischenkreiskondensatoren
- Rs1, Rs2: Beschaltungswiderstände
- Ls1, Ls2: Strombegrenzungsdrosseln
- Ccl1, Ccl2: Beschaltungskondensatoren
- Vcl1, Vcl2: Beschaltungsdioden

## Patentansprüche

1. Stromrichterschaltungsanordnung, umfassend
- einen Gleichrichter (1, 2), insbesondere mit einer 12-Puls Topologie, mit einem ersten Teilgleichrichter (1) und einem zweiten Teilgleichrichter (1), die an ein Wechselspannungsnetz (3) angeschlossen sind und einen Gleichspannungszwischenkreis (4) speisen, wobei der erste Teilgleichrichter (1) mit einem Plusanschluss (5) des Gleichspannungszwischenkreises (4) und der zweite Teilgleichrichter (2) mit einem Minusanschluss (6) des Gleichspannungszwischenkreises (4) verbunden ist,
- einen Wechselrichter (9), der an den Gleichspannungszwischenkreis (4) angeschlossen ist;
**dadurch gekennzeichnet, dass** eine Schutzschaltung (7) zwischen die beiden Teilgleichrichter (1,2) und ein mittleres Potential (8) des Gleichspannungszwischenkreises (4) geschaltet ist.

2. Schaltungsanordnung nach Anspruch 1, **dadurch gekennzeichnet, dass** die Schutzschaltung (7) erste, zweite und dritte Spannungsbegrenzerelemente (V1, V2, V3) umfasst, wobei die ersten Spannungsbegrenzerelemente (V1) einerseits mit dem ersten Teilgleichrichter (1), die zweiten (V2) einerseits mit dem zweiten Teilgleichrichter (2), die dritten (V3) einerseits mit dem mittleren Potential (8) und alle drei andererseits mit einem gemeinsamen Knotenpunkt (10) verbunden sind.

3. Schaltungsanordnung nach Anspruch 2, **dadurch gekennzeichnet, dass** die ersten und zweiten Spannungsbegrenzerelemente (V1, V2) ein- und ausschaltbar sind.

4. Schaltungsanordnung nach Anspruch 2 oder 3, **dadurch gekennzeichnet, dass** die Spannungsbegrenzerelemente (V1, V2, V3) Varistoren oder andere Elemente mit einer verwandten Strom-Spannungscharakteristik umfassen.

5. Schaltungsanordnung nach Anspruch 4, **dadurch gekennzeichnet, dass** parallel zu den Varistoren der ersten und zweiten Spannungsbegrenzerelemente (V1, V2) Schalter (S1, S2) angeordnet sind.

## Claims

1. Converter circuit arrangement comprising
- a rectifier (1, 2), in particular having a 12-pulse topology, having a first partial rectifier (1) and having a second partial rectifier (1) which are connected to an AC power supply (3) and supply a DC intermediate circuit (4), the first partial rectifier (1) being connected to a positive connection (5) of the DC intermediate circuit (4), and the second partial rectifier (2) being connected to a negative connection (6) of the DC intermediate circuit (4),
- an invertor (9) which is connected to the DC intermediate circuit (4);
**characterized in that** a protection circuit (7) is connected between the two partial rectifiers (1, 2) and a mid-potential (8) of the DC intermediate circuit (4).

2. Circuit arrangement according to Claim 1, **characterized in that** the protection circuit (7) comprises first, second and third voltage limiter elements (V1, V2, V3), the first voltage limiter element (V1) being connected on one side to the first partial rectifier (1), the second voltage limiter element (V2) being connected on one side to the second partial rectifier (2), the third voltage limiter element (V3) being connected on one side to the mid-potential (8), and all three voltage limiter elements being connected on the other side to a common node (10).

3. Circuit arrangement according to Claim 2, **characterized in that** the first and second voltage limiter elements (V1, V2) can be switched on and off.

4. Circuit arrangement according to Claim 2 or 3, **characterized in that** the voltage limiter elements (V1, V2, V3) comprise varistors or other elements having a related current/voltage characteristic.

5. Circuit arrangement according to Claim 4, **characterized in that** switches (S1, S2) are arranged in parallel with the varistors of the first and second voltage limiter elements (V1, V2).

## Revendications

1. Agencement de circuit convertisseur de courant qui comprend :
- un redresseur (1, 2) en particulier doté d'une topologie à 12 impulsions, qui comprend un premier redresseur partiel (1) et un deuxième redresseur partiel (1) qui sont raccordés à un réseau (3) à tension alternative et qui alimentent un circuit intermédiaire (4) à tension continue, le premier redresseur partiel (1) étant relié à la borne positive (5) du circuit intermédiaire (4) à tension continue et le deuxième redresseur partiel (2) a la borne négative (6) du circuit intermédiaire (4) à tension continue,
- un onduleur (9) qui est raccordé au circuit intermédiaire (4) à tension continue,
**caractérisé en ce qu'**un circuit de protection (7) est raccordé entre les deux redresseurs partiels (1, 2) et un potentiel moyen (8) du circuit intermédiaire (4) à tension continue.

2. Agencement de circuit selon la revendication 1, **caractérisé en ce que** le circuit de protection (7) comprend des premiers, des deuxièmes et des troisièmes éléments limiteurs de tension (V1, V2, V3), les premiers éléments limiteurs de tension (V1) étant reliés d'une part au premier redresseur partiel (1), les deuxièmes éléments limiteurs de tension (V2) étant reliés d'une part au deuxième redresseur partiel (2) et les troisièmes éléments limiteurs de tension (V3) étant reliés d'une part au potentiel moyen (8) et tous les trois étant reliés d'autre part à un noeud commun (10).

3. Agencement de circuit selon la revendication 2, **caractérisé en ce que** les premiers et les deuxièmes éléments limiteurs de tension (V1, V2) peuvent être branchés et débranchés.

4. Agencement de circuit selon les revendications 2 ou 3, **caractérisé en ce que** les éléments limiteurs de tension (V1, V2, V3) comprennent des varistors ou d'autres éléments qui ont une caractéristique courant-tension apparentée.

5. Agencement de circuit selon la revendication 4, **caractérisé en ce que** des commutateurs (S1, S2) sont disposés en parallèle par rapport aux varistors des premiers et des deuxièmes éléments limiteurs de tension (V1, V2).
